# DEMANDE DE BREVET EUROPEEN

(11) **EP 1 568 989 A1**
(43) Date de publication de la demande: **31.08.2005**
(21) Numéro de dépôt: 05290313.5
(22) Date de dépôt: 11.02.2005
(51) Int. Cl.: G01N 23/04, G21F 1/10, B22D 46/00, B22D 29/00

(54) **Utilisation d'un composé organique pour l'absorption de rayonnements ionisants**

(30) Priorité: 24.02.2004 FR 0401840
(71) Demandeur: SNECMA MOTEURS, 75015 Paris (FR)
(72) Inventeur: Broutin, Eric Louis, 95520 Herblay (FR); Cossard, Serge Georges Guy, 95100 Argenteuil (FR)
(74) Mandataire: Rousset, Jean-Claude

(57) **Abrégé**

On utilise un composé organique de formule CHₙI₄₋ₙ, n étant compris entre un et trois, afin d'absorber des rayonnements ionisants, de préférence lorsque leur énergie est supérieure à environ 10 eV, et plus préférentiellement encore lorsqu'il s'agit de rayons X ou de rayons gamma. Ce matériau peut être notamment utilisé dans des dispositifs de protection contre les rayonnements ionisants et en tant qu'agent marqueur absorbant pour la radiographie.

## Description

L'invention concerne le domaine de l'absorption de rayonnements ionisants.

Les rayonnements ionisants, comme par exemple les rayons X ou les rayons gamma, sont fréquemment utilisés pour effectuer des radiographies de corps de tout type, et notamment du corps humain.

Comme le sait l'homme de l'art, en raison de leurs énergies ces rayonnements ionisants peuvent s'avérer dangereux pour ceux qui les utilisent fréquemment, comme par exemple les radiologues, ou ceux qui y sont exposés, comme par exemple les cosmonautes ou astronautes, et certaines personnes travaillant dans des centrales nucléaires ou auprès d'accélérateurs de particules.

Il existe donc des équipements ou dispositifs de protection, tels que des écrans ou plaques, constitués de matériaux capables d'absorber au moins partiellement les rayonnements ionisants. L'un des matériaux absorbants les plus utilisés est le plomb, en particulier dans le domaine de la radiographie. Ces matériaux absorbants ont généralement une densité élevée qui rend difficile, voire impossible, leur intégration dans des équipements portatifs, tels que des vêtements ou accessoires. De plus, ces matériaux absorbants sont généralement nuisibles pour la santé en raison de leur nature chimique. En outre, ces matériaux absorbants n'étant généralement pas transparents à la lumière visible, ils ne permettent pas une observation directe de la zone exposée aux rayonnements ionisants. Par exemple, il n'est pas possible de les utiliser pour équiper des lunettes de protection.

Par ailleurs, il est également connu, notamment d'après US 5 242 007, de marquer (ou imprégner, ou encore mélanger) des corps ou des substances avec des marqueurs absorbants (ou traceurs), tels que le plomb (Pb), le thorium (Th), le tantale (Ta), le hafnium (Hf), le tungstène (W), ou l'uranium (U), pour faciliter leur détection par radiographie. La qualité de la détection dépendant essentiellement de l'épaisseur du marquage et du pouvoir absorbant du marqueur utilisé, plus le pouvoir absorbant d'un marqueur est faible, plus l'épaisseur déposée doit être importante. Or, il n'est pas toujours possible d'obtenir une épaisseur de marquage importante, notamment dans le cas d'une imprégnation, du fait que ledit marquage résulte de l'introduction du marqueur dans des pores, défauts, microcavités ou interstices du corps, de très petites dimensions. De plus, plus l'épaisseur déposée est importante, plus l'augmentation du poids du corps marqué est importante, et cette augmentation de poids est d'autant plus sensible que la masse moléculaire et la densité du marqueur sont élevées, ce qui est le cas des marqueurs précités.

L'invention a donc pour but de remédier à tout ou partie des inconvénients précités.

Elle propose à cet effet d'utiliser les composés organiques de formule CHₙI₄₋ₙ, n étant compris entre un (1) et trois (3), afin d'absorber des rayonnements ionisants, de préférence lorsque leur énergie est supérieure à environ 10 eV, et plus préférentiellement encore lorsqu'il s'agit de rayons X ou de rayons gamma.

La Demanderesse a en effet découvert que ces composés, et en particulier l'iodométhane (CH₃I) et le diiodométhane (CH₂I₂), présentaient un très fort pouvoir d'absorption des rayonnements ionisants, de l'ordre de trois fois supérieur à celui du plomb, une faible densité, de l'ordre de trois fois inférieure à celle du plomb, et une transparence à la lumière visible, en particulier en phase liquide.

Ces propriétés rendent ces matériaux organiques particulièrement attractifs pour de très nombreuses applications, et notamment dans les domaines de la protection contre les rayonnements ionisants et du marquage de corps en vue de radiographies.

Par exemple, ces matériaux sont particulièrement bien adaptés au marquage des noyaux, par exemple en céramique, destinés au moulage de cavités, par exemple d'aube de turbomachine, et/ou au marquage des résidus subsistant dans ces cavités après retrait des noyaux, en vue d'une radiographie.

L'invention permet également de réaliser des dispositifs de protection contre les rayonnements ionisants, comprenant au moins un élément supportant une couche de CHₙI₄₋ₙ (et notamment du iodométhane (n = 3) ou du diiodométhane (n = 2)), et pouvant être interposé entre un corps et une source de rayonnements ionisants.

De tels dispositifs peuvent être notamment agencés sous la forme de lunettes de protection, d'écrans de protection, de casques de protection, de vêtements de protection, d'accessoires vestimentaires de protection, ou de conteneurs de sources de rayonnements ionisants. Par exemple, chaque élément du dispositif peut définir une cavité étanche remplie de CHₙI₄₋ₙ en phase liquide, préférentiellement non dilué, et peut être réalisé dans un matériau transparent.

D'autres caractéristiques et avantages de l'invention apparaîtront à l'examen de la description détaillée ci-après, et des dessins annexés, sur lesquels :
- la figure 1 illustre de façon schématique, dans une vue en coupe transversale, un exemple de structure d'une aube de turbomachine,
- la figure 2 est une radiographie X d'une partie d'une aube, sans marquage (ou imprégnation), et
- la figure 3 est une radiographie X d'une partie de l'aube de la figure 2, après marquage (ou imprégnation).

Les dessins annexés pourront non seulement servir à illustrer l'invention, mais aussi contribuer à sa définition, le cas échéant.

L'invention concerne l'utilisation du composé organique de formule CHₙI₄₋ₙ, n étant compris entre un (1) et trois (3), pour l'absorption de rayonnements ionisants.

Comme indiqué précédemment, l'invention découle de la découverte par la Demanderesse du pouvoir d'absorption très élevé des rayonnements ionisants par le CHₙI₄₋ₙ (n = 1,2 et 3), et notamment l'iodométhane (CH₃I, soit n = 3) et le diiodométhane (CH₂I₂, soit n = 2), conjointement à une faible densité et à une transparence à la lumière visible, notamment lorsqu'il se trouve en phase liquide.

Plus précisément, le diiodométhane (CH₂I₂) présente un coefficient d'absorption qui est environ trois fois plus grand que celui du plomb et une densité égale à 3,4, soit plus de trois fois plus petite que celle du plomb (égale à 11,4).

Le coefficient d'absorption varie en fonction de la longueur d'onde du rayonnement ionisant. Il est maximal et approximativement constant pour des photons dont l'énergie se situe dans la bande des rayons X, c'est-à-dire pour des énergies comprises entre environ 0,1 keV (kiloélectronvolt) et environ 50 keV. Bien que décroissant avec la longueur d'onde, le coefficient d'absorption demeure encore proche de son maximum pour des photons dont l'énergie se situe dans la bande des rayons gamma, c'est-à-dire pour des énergies supérieures à environ 50 keV. En deçà des rayons X, le coefficient d'absorption décroît rapidement lorsque la longueur d'onde croît, mais il demeure cependant élevé pour des photons dont l'énergie appartient à la partie haute de la bande ultraviolette (ultra violet lointain), c'est-à-dire pour des énergies comprises entre environ 0,01 keV et environ 0,1 keV:

En raison de la propriété d'absorption du diiodométhane (CH₂I₂), on a besoin d'une épaisseur environ trois fois plus petite que celle nécessaire avec du plomb pour obtenir une absorption équivalente à celle du plomb. Par ailleurs, en raison de la densité du diiodométhane (CH₂I₂), on a besoin d'environ trois fois moins de diiodométhane que de plomb pour assurer une protection contre les rayonnements ionisants équivalente à celle conférée par le plomb.

Il en résulte que l'on peut désormais concevoir de très nombreux équipements (ou dispositifs) de protection contre les rayonnements ionisants, portables ou non, et notamment des écrans de protection, éventuellement pour des engins spatiaux, des masques de protection, des casques de protection, des vêtements de protection, comme par exemple des blouses, des tabliers, des gants ou des combinaisons, des accessoires vestimentaires, comme par exemple des inserts de protection intégrables dans des poches de vêtements, ou des conteneurs de sources de rayonnements ionisants, telles que des déchets radioactifs.

En outre, en raison de la transparence du CHₙI₄₋ₙ à la lumière visible, en particulier lorsqu' il est en phase liquide, il peut être utilisé pour réaliser des équipements de protection transparents, comme par exemple des écrans, des visières, ou des lunettes de protection.

Ainsi, pour réaliser un écran de protection transparent, on peut utiliser un élément transparent, par exemple en verre ou en polycarbonate, définissant un logement propre à recevoir (ou supporter) du CHₙI₄₋ₙ liquide. Ce logement peut être ouvert sur une face supérieure lorsque l'écran est destiné à être placé sensiblement horizontalement. Cela résulte du fait que le CHₙI₄₋ₙ ne s'évapore pas, ou très peu, à l'air. Mais le logement peut être complètement fermé et étanche et rempli intégralement de CHₙI₄₋ₙ, afin que l'équipement offre une absorption sensiblement uniforme, par exemple.

À titre d'exemple, une couche liquide de diiodométhane d'environ 1 mm d'épaisseur suffit à absorber l'intégralité des rayons ionisants émis par une source dès lors que leur énergie est comprise dans la bande X.

Il est important de noter que le pouvoir d'absorption du CHₙI₄₋ₙ ne se limite pas aux photons. Il concerne également des particules, comme par exemple les neutrons, dès lors que leur énergie est préférentiellement comprise dans les bandes d'énergie précitées (X et gamma).

Lorsqu'il est utilisé en phase liquide, le CHₙI₄₋ₙ est préférentiellement pur. Mais, il peut être également mélangé à un ou plusieurs autres matériaux.

L'invention trouve également une application particulièrement intéressante dans le domaine de la radiographie. En effet, on peut également utiliser le CHₙI₄₋ₙ en tant qu'agent de marquage de corps ou de substances, en vue d'une observation radiographique.

Par exemple, on peut utiliser le CHₙI₄₋ₙ pour observer l'aspect de cavités réalisées dans des pièces moulées telles que des aubes de turbomachines.

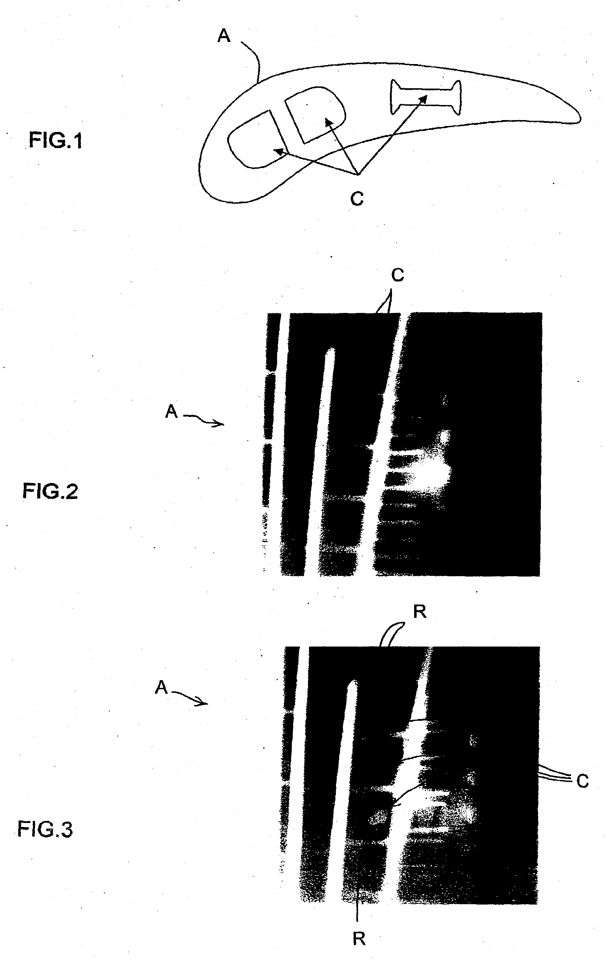

Comme cela est bien connu de l'homme de l'art, et comme cela est illustré sur la vue en coupe transversale de la figure 1, certaines aubes métalliques A de turboréacteurs comprennent des évidements (ou cavités) C réalisés par moulage.

Plus précisément, pour réaliser de telles aubes A on coule, au sein d'un moule, du métal autour de noyaux, généralement en céramique. Puis, on retire les noyaux par un procédé chimique appelé "décochage de noyau". Un inconvénient de ce procédé est qu'il laisse fréquemment à l'intérieur des cavités C des résidus de céramique indésirables, qui sont difficilement observables en radiographie.

Afin de rendre ces résidus de noyau plus facilement observables en radiographie, deux techniques ont été proposées, notamment dans US 5 242 007. L'une de ces techniques consiste à prévoir un noyau céramique incorporant un agent marqueur (ou agent dopant) présentant un bon coefficient d'absorption des rayonnements ionisants, comme par exemple le plomb (Pb), le thorium (Th), le tantale (Ta), le hafnium (Hf), le tungstène (W), ou l'uranium (U). Ainsi, les résidus de noyau qui demeurent à l'intérieur des cavités après l'opération de décochage comporteront des particules d'agent marqueur absorbant.

L'autre technique consiste à immerger l'aube dans un bain contenant l'agent marqueur absorbant précité, de préférence après l'opération de décochage, de manière à imprégner les microcavités (ou interstices, ou pores, ou défauts) des résidus de noyau avec des particules d'agent marqueur absorbant.

Quelle que soit la technique utilisée, les résidus de noyau n'ont une chance d'être observés par radiographie qu'à condition que l'épaisseur des particules d'agent marqueur absorbant qui les imprègnent soit suffisamment grande. Fréquemment cela n'est le cas que selon une direction d'observation particulière, de sorte que plusieurs clichés doivent être effectués afin de détecter des résidus de noyau.

Grâce à l'invention, ce problème d'épaisseur est beaucoup moins gênant, voire quasi inexistant, puisque le pouvoir d'absorption des rayonnements ionisants du CHₙI₄₋ₙ est beaucoup plus élevé que celui des agents marqueurs traditionnels.

On peut donc utiliser avantageusement l'une et/ou l'autre des deux techniques de marquage précitées avec le CHₙI₄₋ₙ, et en particulier avec le diiodométhane (CH₂I₂, n = 2). Il est cependant généralement suffisant de n'utiliser que la seconde technique consistant à imprégner l'aube (ou tout autre corps) après décochage des noyaux. Un exemple comparatif de radiographies X d'une même partie d'aube A avant et après imprégnation à l'aide de diiodométhane est illustré sur les figures 2 et 3, respectivement.

Ces radiographies ont été obtenues à l'aide d'une source de rayons X de 1,5 keV, un débit de 10 mA. un film Kodak M CP, une distance foyer-film de 1200 mm, un foyer de 1,5 mm x 1,5 mm, et un temps d'exposition de 66 secondes.

Comme on peut le constater sur la figure 3, les résidus de noyau R apparaissent avec un contraste élevé dans les différentes cavités C de l'aube après imprégnation à l'aide du diiodométhane, alors même que la durée d'exposition (66 s) est faible.

Il est important de noter, comme indiqué précédemment, que le CHₙI₄₋ₙ peut être utilisé comme agent marqueur absorbant pour la radiographie photonique, en particulier en bande X et en bande gamma. Mais, on peut également l'utiliser comme agent marqueur absorbant pour faire d'autres types de radiographie, et notamment des neutronographies.

L'invention ne se limite pas aux modes de réalisation de dispositif de protection et aux utilisations du CHₙI₄₋ₙ décrits ci-avant, seulement à titre d'exemple, mais elle englobe toutes les variantes que pourra envisager l'homme de l'art.

## Revendications

1. Procédé pour détecter par radiographie, dans une cavité d'une pièce moulée résultant de l'élimination d'un noyau de moulage, la présence de résidus dudit noyau, dans lequel lesdits résidus sont marqués par une substance absorbant les rayonnements ionisants, **caractérisé en ce que** ladite substance est un composé de formule CHₙI₄₋ₙ, dans laquelle n est compris entre 1 et 3.

2. Procédé selon la revendication 1, **caractérisé en ce que** ledit composé est incorporé au noyau avant le moulage.

3. Procédé selon la revendication 1, **caractérisé en ce que** ledit composé est incorporé aux résidus de noyau après démoulage.

4. Procédé selon l'une des revendications 2 et 3, **caractérisé en ce que** ledit composé est introduit dans des pores ou interstices du noyau ou des résidus.

5. Procédé selon l'une des revendications 2 à 4, **caractérisé en ce que** ledit composé est incorporé par immersion du noyau ou de la pièce moulée dans un liquide contenant ledit composé.

6. Procédé selon l'une des revendications précédentes, **caractérisé en ce que** ledit noyau est réalisé dans un matériau céramique.

7. Procédé selon l'une des revendications précédentes, **caractérisé en ce que** ladite pièce moulée est une aube de turbomachine.

8. Procédé selon l'une des revendications précédentes, **caractérisé en ce que** lesdits rayonnements ionisants présentent une énergie supérieure à environ 10 eV.

9. Procédé selon l'une des revendications précédentes, **caractérisé en ce que** lesdits rayonnements ionisants appartiennent à un groupe comprenant les rayons X et les rayons gamma.

10. Procédé selon l'une des revendications précédentes, **caractérisé en ce que** ledit composé est le diiodométhane.

11. Procédé selon l'une des revendications 1 à 9, **caractérisé en ce que** ledit composé est l'iodométhane.
